# EUROPEAN PATENT APPLICATION

(11) **EP 4 769 192 A1**
(43) Date of publication of application: **01.07.2026**
(21) Application number: 25822418.7
(22) Date of filing: 08.01.2025
(51) Int. Cl.: G06F 21/57, H04L 9/32

(54) **BATTERY MANAGEMENT APPARATUS AND SECURE BOOTING METHOD THEREFOR**

(30) Priority: 12.06.2024 KR 20240076231
(71) Applicant: LG Energy Solution, Ltd., Seoul 07335 (KR)
(72) Inventor: KIM, Jinhwan, Daejeon 34122 (KR)
(74) Representative: Plasseraud IP
(86) International application number: PCT/KR2025/000452
(87) International publication number: WO 2025/258785

(57) **Abstract**

A secure booting method performed by a battery management apparatus, according to an embodiment of the present disclosure, may comprise the steps of: in response to occurrence of a shut-down event, authenticating, on the basis of a designated algorithm, firmware stored in a memory of the battery management apparatus; storing an authentication result for the firmware in the memory; and in response to occurrence of a booting event, determining whether to proceed with a booting sequence on the basis of the authentication result stored in the memory.

## Description

### Technical Field

The application was filed with the Korean Intellectual Property Office on June 12, 2024 and this application claims the benefit of Korean Patent Application No. 10-2024-0076231, and the disclosure of which is incorporated herein by reference in its entirety.

Example embodiments disclosed in this application relate to a battery managing apparatus and a secure booting method thereof.

### Background Art

Recently, research and development of secondary batteries is being actively performed. Here, the secondary batteries are batteries that may be charged and discharged, the meaning of which incorporates all of Ni/Cd batteries, Ni/MH batteries and the like of prior art and recent lithium-ion batteries. Among the secondary batteries, the lithium-ion batteries provide a significantly high energy density compared to the Ni/Cd batteries, the Ni/MH batteries and the like of prior art. Furthermore, the lithium-ion batteries may be manufactured in a small size and with a light weight to be used as a power source of a mobile device, and have the range of use thereof being recently expanded to a power source of an electric vehicle, thereby coming to the fore as a next-generation energy storage medium.

A state and an operation of a battery may be managed and controlled by a battery management system (BMS). The BMS may be included in a single apparatus along with a battery.

The BMS may proceed with booting when an apparatus including the same is turned on, and proceed with shutdown when the apparatus thereof is turned off. Meanwhile, upon booting, secure booting may be proceeded with to authenticate integrity and reliability of a firmware stored in the BMS. In case that the firmware is not a genuine product, a processor of the BMS may generally stop booting of a wrong software and proceed with an emergency restoration mode.

Existing secure booting requires a long period of time for authentication, thereby causing a problem of delaying a booting process. Nevertheless, since time for booting of a system is limited, it is generally difficult to perform authentication upon each booting, and thus a problem of security being relatively vulnerable may arise.

### Detailed Description of the Invention

### Technical Goals

According to an example embodiment of the present disclosure, provided are a battery managing apparatus and a secure booting method thereof, which may perform authentication with respect to a firmware during shutdown of a system, thereby reducing time required for secure booting.

According to an example embodiment of the present disclosure, provided are the battery managing apparatus and the secure booting method thereof, which may perform a firmware authentication by using an authentication key during each shutdown of a system, thereby improving system security.

The technical goals aimed by an example embodiment of the present disclosure are not limited to the technical goals as described above, and other technical goals may be derived from the following example embodiments.

### Technical solutions

According to an example embodiment of the present disclosure, a secure booting method performed by a battery managing apparatus includes, in response to a shutdown event occurring, authenticating a firmware stored in a memory of the battery managing apparatus based on a predetermined algorithm, storing an authentication result of the firmware in the memory, and, in response to a booting event occurring, determining whether to proceed with a boot sequence based on the authentication result stored in the memory.

According to an example embodiment of the present disclosure, in the secure booting method performed by the battery managing apparatus, the predetermined algorithm may include a cipher-based message authentication code (MAC) algorithm by which a first MAC corresponding to the firmware is authenticated using an authentication key.

According to an example embodiment of the present disclosure, in the secure booting method performed by the battery managing apparatus, the authenticating the firmware may include generating a second MAC using the firmware and the authentication key, and comparing the first MAC and the second MAC.

According to an example embodiment of the present disclosure, in the secure booting method performed by the battery managing apparatus, the authenticating the firmware may include, when the first MAC and the second MAC match, identifying the firmware as valid, and when the first MAC and the second MAC do not match, identifying the firmware as invalid.

According to an example embodiment of the present disclosure, in the secure booting method performed by the battery managing apparatus, the determining whether to proceed with the boot sequence may include, when the firmware is identified as valid based on the authentication result, determining to proceed with the boot sequence.

According to an example embodiment of the present disclosure, in the secure booting method performed by the battery managing apparatus, the determining whether to proceed with the boot sequence may include, when the firmware is identified as invalid based on the authentication result, re-authenticating the firmware based on the predetermined algorithm.

According to an example embodiment of the present disclosure, in the secure booting method performed by the battery managing apparatus, the determining whether to proceed with the boot sequence may include, when the firmware is identified as valid according to the re-authenticating, determining to proceed with the boot sequence, and when the firmware is identified as invalid according to the re-authenticating, determining not to proceed with the boot sequence.

According to an example embodiment of the present disclosure, the secure booting method performed by the battery managing apparatus may further include, when determined is not to proceed with the boot sequence, limiting proceeding with the boot sequence and outputting a warning notification.

According to an example embodiment of the present disclosure, a battery managing apparatus includes a memory configured to store a firmware and a processor that is operatively connected to the memory, and the processor is configured to, in response to a shutdown event occurring, authenticate the firmware based on a predetermined algorithm, store an authentication result of the firmware in the memory, and in response to a booting event occurring, determine whether to proceed with a boot sequence based on the authentication result stored in the memory.

According to an example embodiment of the present disclosure, in the battery managing apparatus, the memory may be configured to store an authentication key, and the predetermined algorithm may include a cipher-based MAC algorithm by which a first MAC corresponding to the firmware is authenticated using the authentication key.

According to an example embodiment of the present disclosure, in the battery managing apparatus, the processor may be configured to generate a second MAC by using the firmware and the authentication key, and authenticate the firmware by comparing the first MAC and the second MAC.

According to an example embodiment of the present disclosure, in the battery managing apparatus, the processor may be configured to, when the first MAC and the second MAC match, identify the firmware as valid, and when the first MAC and the second MAC do not match, identify the firmware as invalid.

According to an example embodiment of the present disclosure, in the battery managing apparatus, the processor may be configured to, when the firmware is identified as valid based on the authentication result, determine to proceed with the boot sequence.

According to an example embodiment of the present disclosure, in the battery managing apparatus, the processor may be configured to, when the firmware is identified as invalid based on the authentication result, re-authenticate the firmware based on the predetermined algorithm.

According to an example embodiment of the present disclosure, in the battery managing apparatus, the firmware may be identified as valid according to the re-authenticating, determining to proceed with the boot sequence, and when the firmware may be identified as invalid according to the re-authenticating, determining not to proceed with the boot sequence.

### Effects of the Invention

According to the example embodiments disclosed in the present disclosure, it is possible that time required for secure booting of a battery managing apparatus is reduced.

According to the example embodiments disclosed in the present disclosure, it is possible that a firmware authentication is performed using an authentication key, thereby improving system security.

The effects to be obtained in the present disclosure are not limited to the aforementioned effects, and other effects not mentioned herein will be clearly understood by those skilled in the art from the following description.

### Brief Description of Drawings

FIG. 1 is a block diagram of a battery managing apparatus according to an example embodiment of the present disclosure.
FIG. 2 is a drawing illustrating an example of a battery managing apparatus authenticating firmware using an authentication key according to an example embodiment of the present disclosure.
FIG. 3 is an operation flowchart of a battery managing apparatus according to an example embodiment of the present disclosure.
FIG. 4 is an operation flowchart of a battery managing apparatus according to an example embodiment of the present disclosure.
FIG. 5 is an operation flowchart of a battery managing apparatus according to an example embodiment of the present disclosure.

### Mode for Carrying Out the Invention

In describing the example embodiments, descriptions of technical contents that are well known in the technical field to which the present disclosure pertains and that are not directly related to the present disclosure will be omitted. This is to more clearly convey the gist of the present disclosure without obscuring the gist of the present disclosure by omitting unnecessary description.

For the same reason, some elements are exaggerated, omitted or schematically illustrated in the accompanying drawings. In addition, the size of each element does not fully reflect the actual size. In each figure, the same or corresponding elements are assigned the same reference numerals.

Advantages and features of the present disclosure, and a method of achieving the advantages and the features will become apparent with reference to the example embodiments described below in detail together with the accompanying drawings. However, the present disclosure is not limited to the example embodiments disclosed below, and may be implemented in various different forms. The example embodiments are provided only so as to render the present disclosure complete, and completely inform the scope of the present disclosure to those of ordinary skill in the art to which the present disclosure pertains. The present disclosure is only defined by the scope of the claims. Like reference numerals refer to like elements throughout.

In this case, it will be understood that each block of a flowchart diagram and a combination of the flowchart diagrams may be performed by computer program instructions. The computer program instructions may be embodied in a processor of a general-purpose computer or a special purpose computer, or may be embodied in a processor of other programmable data processing equipment. Thus, the instructions, executed via a processor of a computer or other programmable data processing equipment, may generate a part for performing functions described in the flowchart blocks. To implement a function in a particular manner, the computer program instructions may also be stored in a computer-usable or computer-readable memory that may direct a computer or other programmable data processing equipment. Thus, the instructions stored in the computer usable or computer readable memory may be produced as an article of manufacture containing an instruction part for performing the functions described in the flowchart blocks. The computer program instructions may be embodied in a computer or other programmable data processing equipment. Thus, a series of operations may be performed in a computer or other programmable data processing equipment to create a computer-executed process, and the computer or other programmable data processing equipment may provide steps for performing the functions described in the flowchart blocks.

Additionally, each block may represent a module, a segment, or a portion of code that includes one or more executable instructions for executing a specified logical function(s). It should also be noted that in some alternative implementations the functions recited in the blocks may occur out of order. For example, two blocks shown one after another may be performed substantially at the same time, or the blocks may sometimes be performed in the reverse order according to a corresponding function.

In this case, the term "~ part" used in the example embodiments refers to software or hardware elements such as a field programmable gate array (FPGA) or an application specific integrated circuit (ASIC) and performs predetermined roles. However, the term "~ part" is not a meaning limited to software or hardware. The "~ part" may be formed to be stored in an addressable storage medium or to reproduce one or more processors. Thus, as an example, the "~ part" includes elements such as software elements, object-oriented software elements, class elements, and task elements, and processes, functions, attributes, procedures, sub-routines, segments of a program code, drivers, firmware, microcodes, circuits, data, database, data structures, tables, arrays, and variables. The functions provided in the elements and the "~ part" may be combined into a smaller number of elements and "~ parts" or may be further divided into additional elements and "~ parts." In addition, the elements and the "~ parts" may be implemented to reproduce one or more central processing units (CPUs) in a device or a secure multimedia card.

Expression "at least one of a, b and c" described throughout the specification may include "a alone," "b alone," "c alone," "a and b," "a and c," "b and c" or "all of a, b and c."

In the present disclosure, a "terminal" may be implemented as, for example, a computer or a portable terminal capable of accessing a server or another terminal through a network. Here, the computer may include, for example, a notebook, a desktop computer, and/or a laptop computer which are equipped with a web browser. The portable terminal may be a wireless communication device ensuring portability and mobility, and include (but is not limited to) any type of handheld wireless communication device, for example, a tablet PC, a smartphone, a communication-based terminal such as international mobile telecommunication (IMT), code division multiple access (CDMA), W-code division multiple access (W-CDMA), long term evolution (LTE), or the like.

Hereinafter, example embodiments of the present disclosure will be described in detail with reference to the accompanying drawings so that those of ordinary skill in the art to which the present disclosure pertains may easily implement them. However, the present disclosure may be implemented in multiple different forms and is not limited to the example embodiments described herein.

Hereinafter, example embodiments of the present disclosure will be described in detail with reference to the accompanying drawings.

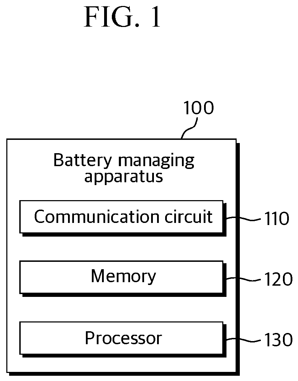

FIG. 1 is a block diagram of a battery managing apparatus according to an example embodiment of the present disclosure.

Referring to FIG. 1, a battery managing apparatus 100 may include a communication circuit 110, a memory 120, and a processor 130. According to an example embodiment, the battery managing apparatus 100 illustrated in FIG. 1 may further include at least one element (for example, a display, an input device, or an output device) other than elements illustrated in FIG. 1.

According to an example embodiment, the communication circuit 110 may establish a wired communication channel and/or a wireless communication channel between the battery managing apparatus 100 and an external electronic device, and transmit and receive data to and from the external electronic device by means of the established communication channel.

Here, communication, in other words, transmission and reception of data may be performed in a wired or wireless manner. For this, the communication circuit 110 may include a wired communication module which accesses the Internet and the like by means of a local area network (LAN), a mobile communication module which transmits and receives data by accessing a mobile communication network via a mobile communication base station, a near-field communication module which uses a communication method based on a wireless local area network (WLAN) such as Wi-Fi, or a communication method based on a wireless personal area network (WPAN) such as Bluetooth and Zigbee, a satellite communication module using a global navigation satellite system (GNSS) such as a global positioning system (GPS), or a combination thereof.

According to an example embodiment, the memory 120 may include a volatile memory and/or a non-volatile memory.

According to an example embodiment, the memory 120 may store data used by at least one element (for example, the processor 130) of the battery managing apparatus 100. For example, data may include software (or, an instruction related thereto), input data or output data. In an example embodiment of the present disclosure, an instruction may cause the battery managing apparatus 100 to perform operations defined by the instruction when performed by the processor 130.

According to an example embodiment, the processor 130 may be implemented as a computer or a device similar thereto according to hardware, software or a combination thereof. Hardware-wise, the processor 130 may be implemented in a form of an electronic circuit that performs a control function by processing an electric signal, and, software-wise, may be implemented in a form of a program that operates the hardware-wise processor 130. According to an example embodiment, the processor 130 may include a central processing device, an application processor, a graphic processing device, a neural processing unit (NPU), an image signal processor, a sensor hub processor, or a communication processor.

Meanwhile, unless being mentioned in particular in the following description, an operation of the battery managing apparatus 100 may be construed as being performed by control of the processor 130.

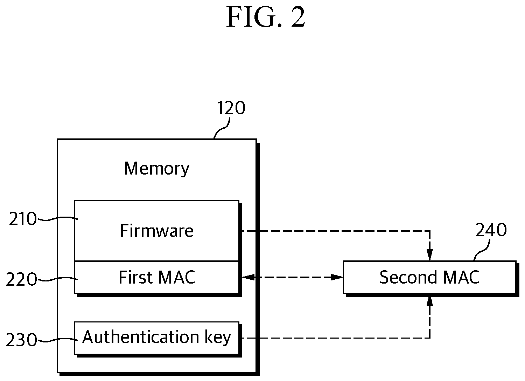

Hereinafter, referring to FIG. 2, a method for the battery managing apparatus 100 to perform secure booting is described.

FIG. 2 is a drawing to describe an example in which the battery managing apparatus 100 according to an example embodiment of the present disclosure authenticates a firmware using an authentication key.

Referring to FIG. 2, the memory 120 included in the battery managing apparatus 100 may store a firmware 210. According to an example embodiment, the firmware 210 may be software that is in charge of operation and control of hardware included in the battery managing apparatus 100.

According to an example embodiment, the battery managing apparatus 100 may, in response to a shutdown event occurring, authenticate the firmware 210 based on a predetermined algorithm. Here, the shutdown event may occur based on an operation in which power of the battery managing apparatus 100 is turned off. For instance, in response to an input of turning off a device (for example, a vehicle) including the battery managing apparatus 100, the operation in which the power of the battery managing apparatus 100 is turned off may be performed. Here, the shutdown event may occur at the same time as the operation in which the power of the battery managing apparatus 100 is turned off begins.

According to an example embodiment, the predetermined algorithm may include a MAC algorithm. Here, the MAC algorithm may be a universal hashing-based message authentication code (UMAC) algorithm, a hash-based message authentication code (HMAC) algorithm, a cipher-based message authentication code (CMAC) algorithm, a block cipher-based message authentication code (VMAC) algorithm using a universal hash, or an algorithm similar thereto.

Hereinafter, an operation in which the battery managing apparatus 100 authenticates the firmware 210 based on the cipher-based MAC algorithm may be described. However, without being limited thereto, the battery managing apparatus 100 may authenticate the firmware 210 based on the above-described various MAC algorithms.

According to an example embodiment, the memory 120 may store a first MAC 220 and an authentication key 230. The first MAC 220 may be generated based on the firmware 210 and the authentication key 230 or a key deduced from the authentication key 230 by means of a key deduction function. For example, the first MAC 220 may be generated by the cipher-based MAC algorithm which receives the authentication key 230 or the key deduced from the authentication key 230 as a secret key input, and receives the firmware 210 as a message input. The generated first MAC 220 may be stored in the memory 120 in relation to the firmware 210. In other words, the first MAC 220 may be a MAC corresponding to the firmware 210.

According to an example embodiment, the battery managing apparatus 100 may authenticate the first MAC 220 corresponding to the firmware 210 using the authentication key 230. In other words, the battery managing apparatus 100 may authenticate integrity and reliability of the firmware 210 by authenticating the first MAC 220.

According to an example embodiment, the battery managing apparatus 100 may generate a second MAC 240 using the firmware 210 and the authentication key 230. For example, the battery managing apparatus 100 may generate the second MAC 240 by performing the cipher-based MAC algorithm with respect to the firmware 210 and the authentication key 230 or the key deduced by means of the key deduction function from the authentication key 230.

According to an example embodiment, the battery managing apparatus 100 may compare the first MAC 220 and the second MAC 240. The battery managing apparatus 100 may authenticate integrity and reliability of the firmware 210 based on a comparison result. For instance, the battery managing apparatus 100 may identify the firmware 210 as valid, or identify the same as invalid, based on the comparison result. Here, when the firmware 210 is identified as valid, integrity and reliability of the firmware 210 may be authenticated.

According to an example embodiment, the battery managing apparatus 100 may identify the firmware 210 as valid when the first MAC 220 and the second MAC 240 match. The battery managing apparatus 100 may identify the firmware 210 as invalid when the first MAC 220 and the second MAC 240 do not match.

According to an example embodiment, the battery managing apparatus 100 may store an authentication result of the firmware 210 in the memory 120. For instance, the battery managing apparatus 100 may store information related to validity of the firmware 210 in the memory 120. After then, the battery managing apparatus 100 may be shut down by performing a shutdown operation.

According to an example embodiment, the battery managing apparatus 100 may, in response to a booting event occurring, determine whether to proceed with a boot sequence based on the authentication result stored in the memory 120. Here, the booting event may occur based on an operation in which power of the battery managing apparatus 100 is turned on. For instance, in response to an input in which a device including the battery managing apparatus 100 is turned on, the operation in which the power of the battery managing apparatus 100 is turned on may be performed. Here, the booting event may occur at the same time as the operation in which the power of the battery managing apparatus 100 is turned on begins. Further, the boot sequence may include various operations to boot the battery managing apparatus 100.

According to an example embodiment, the battery managing apparatus 100 may determine to proceed with the boot sequence when the firmware 210 is identified as valid based on the authentication result stored in the memory 120. After then, the battery managing apparatus 100 may proceed with the boot sequence.

According to an example embodiment, the battery managing apparatus 100 may, when the firmware 210 is identified as invalid based on the authentication result stored in the memory 120, re-authenticate the firmware 210 based on a predetermined algorithm. Here, the predetermined algorithm may be identical to an algorithm used by the battery managing apparatus 100 to authenticate the firmware 210 in response to a shutdown event occurring (for example, a cipher-based MAC algorithm).

According to an example embodiment, the battery managing apparatus 100 may determine whether to proceed with the boot sequence based on a re-authentication result. For instance, when the firmware 210 is identified as valid according to re-authenticating, the battery managing apparatus 100 may determine to proceed with the boot sequence. After then, the battery managing apparatus 100 may proceed with the boot sequence. As another example, when the firmware 210 is identified as invalid according to the re-authenticating, the battery managing apparatus 100 may determine not to proceed with the boot sequence. In such a case, the battery managing apparatus 100 may limit proceeding with the boot sequence, and output a warning notification.

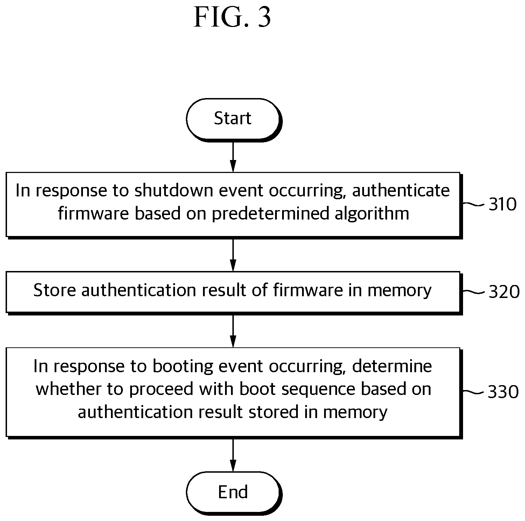

FIG. 3 is an operation flowchart of a battery managing apparatus according to an example embodiment of the present disclosure. An operation method of FIG. 3 may be performed by the battery managing apparatus 100 in FIG. 1, and thus duplicate descriptions to the above-described contents may be omitted, and may be described using configurations of FIG. 1 and FIG. 2.

An example embodiment illustrated in FIG. 3 is only an example embodiment, and an order of operations according to various example embodiments of the present disclosure may be different from what is illustrated in FIG. 3, and some operations illustrated in FIG. 3 may be omitted, or an order among the operations may be changed, or the operations may be merged.

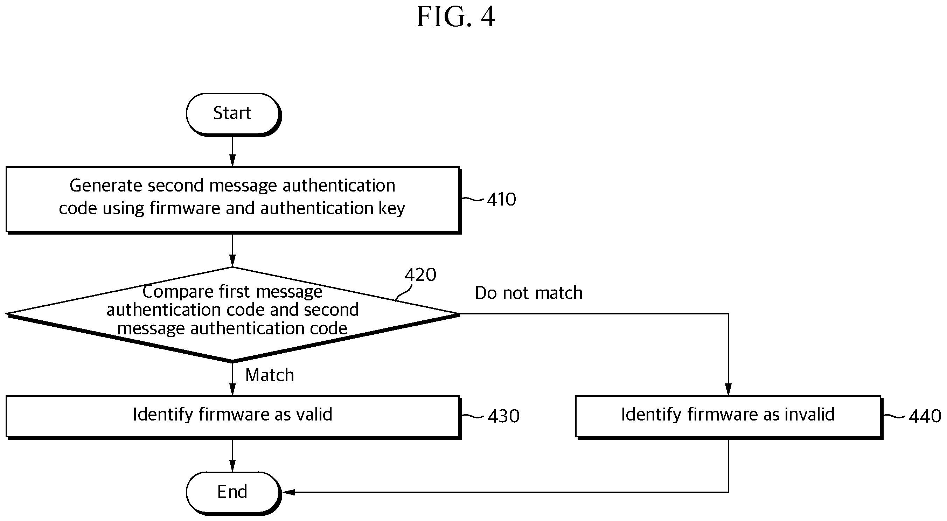

Referring to FIG. 3, in an operation 310, the battery managing apparatus 100 may, in response to a shutdown event occurring, authenticate the firmware 210 stored in the memory 120 based on a predetermined algorithm. According to an example embodiment, the predetermined algorithm may include a MAC algorithm. An operation in which the battery managing apparatus 100 authenticates the firmware 210 may be specifically described by means of FIG. 4 that is to be described hereinafter.

In an operation 320, the battery managing apparatus 100 may store an authentication result of the firmware 210 performed in the operation 310 in the memory 120.

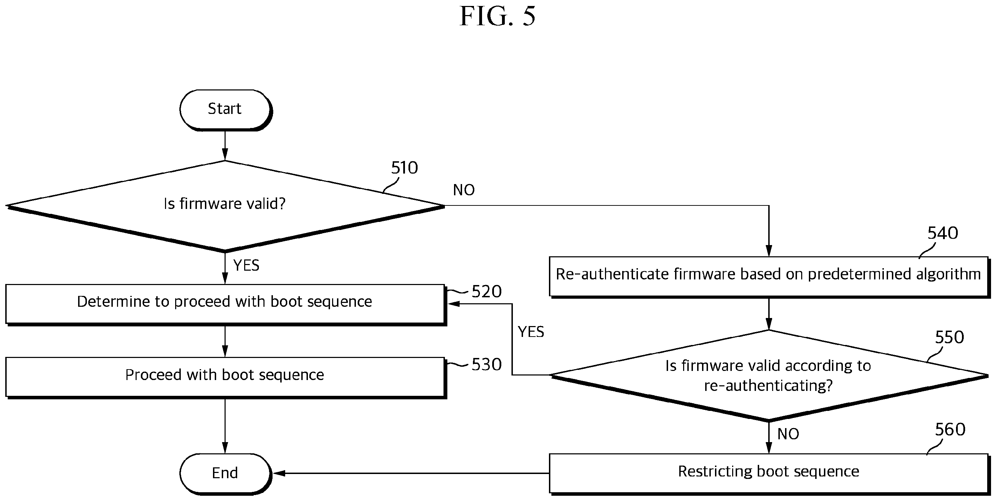

In an operation 330, the battery managing apparatus 100 may, in response to a booting event occurring, determine whether to proceed with the boot sequence based on the authentication result stored in the memory 120 in the operation 320. An operation in which the battery managing apparatus 100 determines whether to proceed with the boot sequence may be specifically described by means of FIG. 5 that is to be described hereinafter.

FIG. 4 is an operation flowchart of a battery managing apparatus according to an example embodiment of the present disclosure. An operation method of FIG. 4 may be performed by the battery managing apparatus 100 in FIG. 1, and thus duplicate descriptions to the above-described contents may be omitted, and may be described using configurations of FIG. 1 and FIG. 2.

An example embodiment illustrated in FIG. 4 is only an example embodiment, and an order of operations according to various example embodiments of the present disclosure may be different from what is illustrated in FIG. 4, and some operations illustrated in FIG. 4 may be omitted, or an order among the operations may be changed, or the operations may be merged.

Referring to FIG. 4, in an operation 410, the battery managing apparatus 100 may generate the second MAC 240 using the firmware 210 and the authentication key 230. For instance, the battery managing apparatus 100 may generate the second MAC 240 by performing a cipher-based MAC algorithm with respect to the firmware 210, the authentication key 230 or the key deduced by means of the key deduction function from the authentication key 230.

In an operation 420, the battery managing apparatus 100 may compare the first MAC 220 stored in the memory 120 and the second MAC 240 generated in the operation 410.

When the first MAC 220 and the second MAC 240 match in the operation 420, in an operation 430, the battery managing apparatus 100 may identify the firmware 210 as valid.

When the first MAC 220 and the second MAC 240 do not match in the operation 420, in the operation 430, the battery managing apparatus 100 may identify the firmware 210 as invalid.

FIG. 5 is an operation flowchart of a battery managing apparatus according to an example embodiment of the present disclosure. An operation method of FIG. 5 may be performed by the battery managing apparatus 100 in FIG. 1, and thus duplicate descriptions to the above-described contents may be omitted, and may be described using configurations of FIG. 1 and FIG. 2.

An example embodiment illustrated in FIG. 5 is only an example embodiment, and an order of operations according to various example embodiments of the present disclosure may be different from what is illustrated in FIG. 5, and some operations illustrated in FIG. 5 may be omitted, or an order among the operations may be changed, or the operations may be merged.

Referring to FIG. 5, in an operation 510, the battery managing apparatus 100 may identify whether the firmware 210 is valid. According to an example embodiment, the battery managing apparatus 100 may identify whether the firmware 210 is valid based on the authentication result of the firmware 210 stored in the memory 120 in the operation 320 of FIG. 3.

When the firmware 210 is identified as valid ("YES") based on the authentication result stored in the memory 120 in an operation 510, in an operation 520, the battery managing apparatus 100 may determine to proceed with the boot sequence.

In an operation 530, the battery managing apparatus 100 may proceed with the boot sequence. The boot sequence may include various operations to boot the battery managing apparatus 100.

When the firmware is identified as invalid ("NO") based on the authentication result stored in the memory 120 in the operation 510, in an operation 540, the battery managing apparatus 100 may re-authenticate the firmware 210 based on a predetermined algorithm. Here, the predetermined algorithm may be identical to the algorithm used by the battery managing apparatus 100 to authenticate the firmware 210 in the operation 310 of FIG. 3.

In an operation 550, the battery managing apparatus 100 may identify whether the firmware 210 is valid according to a re-authentication result of the operation 540.

When the firmware 210 is identified as valid ("YES") according to the re-authentication result of the operation 540 in the operation 550, in the operation 520, the battery managing apparatus 100 may determine to proceed with the boot sequence.

When the firmware 210 is identified as invalid ("NO") according to the re-authentication result of the operation 540 in the operation 550, in an operation 560, the battery managing apparatus 100 may determine not to proceed with the boot sequence.

In the operation 560, the battery managing apparatus 100 may limit proceeding with the boot sequence. According to an example embodiment, the battery managing apparatus 100 may output a warning notification.

A battery managing apparatus according to the above-described example embodiments may include a processor, a memory configured to store and perform program data, a permanent storage such as a disc drive, a communication port communicating with an external device, a touch panel, a key, a user interface device such as an icon and the like. Methods implemented by a software module or an algorithm may be stored on a computer-readable recording medium as computer-readable codes or program instructions which may be performed on the processor. Here, the computer-readable recording medium includes a magnetic storage medium (for instance, a read-only memory (ROM), a random-access memory (RAM), a floppy disc, a hard disc and the like), an optical reading medium (for instance, a CD-ROM, and a digital versatile disc (DVD)) and the like. The computer-readable recording medium may be distributed to computer systems connected by means of a network, in order for a computer-readable code to be stored and performed in a distribution method. The medium may be computer-readable, stored in the memory, and performed at the processor.

Various example embodiments of the present disclosure may be illustrated as functional block configurations and various processing steps. These functional blocks may be implemented as various numbers of hardware or/and software configurations that perform particular functions. For instance, an example embodiment of the present disclosure may adopt direct circuit configurations such as a memory, processing, logic, a look-up table and the like which may perform various functions by control of at least one micro-processor or other control devices. Similar to elements being able to be performed as software programming or software elements, the present example embodiment may include various algorithms implemented by combinations of data structures, processes, routines or other programming configurations, to be implemented as a programming or scripting language such as C, C++, Java, an assembler and the like. Functional aspects may be implemented by an algorithm performed by at least one processor. Further, the present example embodiment may adopt prior art for electronic environment setting, signal processing, and/or data processing. The terms such as "mechanism," "element," "means," and "configuration" may be widely used, and are not limited to mechanical and physical configurations. The terms may include a meaning of a series of routines of software by being linked to a processor and the like.

The above-described example embodiments are only an example, and other example embodiments may be implemented within the scope of the claims described hereinafter.

## Claims

1. A secure booting method performed by a battery managing apparatus, the secure booting method comprising:
in response to a shutdown event occurring, authenticating a firmware stored in a memory of the battery managing apparatus based on a predetermined algorithm;
storing an authentication result of the firmware in the memory; and
in response to a booting event occurring, determining whether to proceed with a boot sequence based on the authentication result stored in the memory.

2. The secure booting method of claim 1,
wherein the predetermined algorithm comprises a cipher-based message authentication code (MAC) algorithm by which a first MAC corresponding to the firmware is authenticated using an authentication key.

3. The secure booting method of claim 2,
wherein authenticating the firmware comprises:
generating a second MAC using the firmware and the authentication key; and
comparing the first MAC and the second MAC.

4. The secure booting method of claim 3,
wherein authenticating the firmware comprises:
when the first MAC and the second MAC match, identifying the firmware as valid; and
when the first MAC and the second MAC do not match, identifying the firmware as invalid.

5. The secure booting method of claim 1,
wherein determining whether to proceed with the boot sequence comprises, when the firmware is identified as valid based on the authentication result, determining to proceed with the boot sequence.

6. The secure booting method of claim 1,
wherein determining whether to proceed with the boot sequence comprises, when the firmware is identified as invalid based on the authentication result, re-authenticating the firmware based on the predetermined algorithm.

7. The secure booting method of claim 6,
wherein determining whether to proceed with the boot sequence comprises:
when the firmware is identified as valid according to the re-authenticating, determining to proceed with the boot sequence; and
when the firmware is identified as invalid according to the re-authenticating, determining not to proceed with the boot sequence.

8. The secure booting method of claim 7,
further comprising, when it is determined not to proceed with the boot sequence, restricting proceeding of the boot sequence and outputting a warning notification.

9. A battery managing apparatus comprising:
a memory configured to store a firmware; and
a processor that is operatively connected to the memory,
wherein the processor is configured to:
in response to a shutdown event occurring, authenticate the firmware based on a predetermined algorithm;
store an authentication result of the firmware in the memory; and
in response to a booting event occurring, determine whether to proceed with a boot sequence based on the authentication result stored in the memory.

10. The battery managing apparatus of claim 9,
wherein the memory is configured to store an authentication key, and
wherein the predetermined algorithm comprises a cipher-based MAC algorithm by which a first MAC corresponding to the firmware is authenticated using the authentication key.

11. The battery managing apparatus of claim 10,
wherein the processor is configured to:
generate a second MAC by using the firmware and the authentication key; and
authenticate the firmware by comparing the first MAC and the second MAC.

12. The battery managing apparatus of claim 11,
wherein the processor is configured to:
when the first MAC and the second MAC match, identify the firmware as valid; and
when the first MAC and the second MAC do not match, identify the firmware as invalid.

13. The battery managing apparatus of claim 9,
wherein the processor is configured to,
when the firmware is identified as valid based on the authentication result, determine to proceed with the boot sequence.

14. The battery managing apparatus of claim 9,
wherein the processor is configured to,
when the firmware is identified as invalid based on the authentication result, re-authenticate the firmware based on the predetermined algorithm.

15. The battery managing apparatus of claim 14,
when the firmware is identified as valid according to the re-authenticating, determine to proceed with the boot sequence; and
when the firmware is identified as invalid according to the re-authenticating, determine not to proceed with the boot sequence.
